(19) **Europäisches Patentamt** / **European Patent Office** / **Office européen des brevets**

(11) **EP 2 219 293 B1**

(12) ## EUROPEAN PATENT SPECIFICATION

(45) Date of publication and mention
of the grant of the patent:
**13.04.2016 Bulletin 2016/15**

(21) Application number: **07845688.6**

(22) Date of filing: **23.11.2007**

(51) Int Cl.:
*H04B 1/7105* (2011.01)    *H04B 7/06* (2006.01)
*H04L 1/06* (2006.01)

(86) International application number:
**PCT/CN2007/003316**

(87) International publication number:
**WO 2009/065261 (28.05.2009 Gazette 2009/22)**

(54) **TRANSMITTING DIVERSITY AND RECEIVER PROCESSING METHOD IN TD-SCDMA SYSTEM**

SENDEDIVERSITÄTS- UND EMPFÄNGERVERARBEITUNGSVERFAHREN IN EINEM TD-SCDMA-SYSTEM

PROCÉDÉ DE DIVERSITÉ D'ÉMISSION ET DE TRAITEMENT DE RÉCEPTION DANS UN SYSTÈME TD-SCDMA

(84) Designated Contracting States:
**AT BE BG CH CY CZ DE DK EE ES FI FR GB GR HU IE IS IT LI LT LU LV MC MT NL PL PT RO SE SI SK TR**

(43) Date of publication of application:
**18.08.2010 Bulletin 2010/33**

(73) Proprietor: **ZTE Corporation**
**Guangdong Province 518057 (CN)**

(72) Inventors:
• **GENG, Peng**
 **Shenzhen**
 **Guangdong 518057 (CN)**
• **LI, Bin**
 **Shenzhen**
 **Guangdong 518057 (CN)**
• **LIN, Wei**
 **Shenzhen**
 **Guangdong 518057 (CN)**
• **ZHANG, Yingyu**
 **Shenzhen**
 **Guangdong 518057 (CN)**
• **QIN, Hongfeng**
 **Shenzhen**
 **Guangdong 518057 (CN)**
• **XIAO, Lianbin**
 **Shenzhen**
 **Guangdong 518057 (CN)**
• **JIANG, Hai**
 **Shenzhen**
 **Guangdong 518057 (CN)**

(74) Representative: **Petraz, Gilberto Luigi et al**
**GLP S.r.l.**
**Viale Europa Unita, 171**
**33100 Udine (IT)**

(56) References cited:
**CN-A- 1 512 795        CN-A- 1 585 283
US-A1- 2006 227 908**

• **FABRICE PORTIER ET AL: "Transmission techniques for downlink multi-antenna MC-CDMA systems in a beyond-3G context", JOURNAL OF COMMUNICATIONS AND NETWORKS, KOREAN INSTITUTE OF COMMUNICATION SCIENCES, SEOUL, KR, vol. 7, no. 2, 1 June 2005 (2005-06-01), pages 157-170, XP011483474, ISSN: 1229-2370, DOI: 10.1109/JCN.2005.6387863**
• **"Revised Overview of IMT-2000 CDMA TDD", 3GPP DRAFT; R1-00-1038, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Helsinki, Finland; 20000703, 18 August 2000 (2000-08-18), XP050487570, [retrieved on 2000-08-18]**

• "System Simulation and Algorithm Evaluation", 3GPP DRAFT; D321, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Dresden, Germany; 19991228, 28 December 1999 (1999-12-28), XP050090925, [retrieved on 1999-12-28]

• "System Simulation and Algorithm Evaluation", 3GPP DRAFT; D321, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Dresden, Germany;

## Description

Technical Field

The present invention relates to a time division-synchronous code division multiple access (TD-SCDMA) system in communication field, and more particularly, to a method for transmit diversity and a method for signal processing by a receiver in the TD-SCDMA system. The features of the preamble of the independent claims are known from FABRICE PORTIER ET AL: "Transmission techniques for downlink multi-antenna MC-CDMA system in a beyond-3G context". Relevant technologies are also known from US 2006/227908 A1.

Background of the Related Art

Transmit diversity is a general anti-fading technique in a modern mobile communication system. For a TD-SCDMA system, as resolution of the chip precision is relatively low, multi-path diversity combination gain is hard to acquire in environments of wireless fading channels with little time delay extension, therefore, transmit diversity gain seems rather important to the TD-SCDMA system.

Space-time block code (STBC) based on Alamouti encoding is a general transmit diversity technique. Taking transmission using two antennas as an example, adjacent symbols $S_1$ and $S_2$ for transmission are transmitted simultaneously from two transmitting antennas respectively, with time-interleaved and being orthogonal to each other, i.e., antenna 1 transmits $[S_1, S_2]$, and antenna 2 transmits $\left[ -S_2^*, \quad S_1^* \right]$; since the transmit signals are orthogonal, transmit diversity gain can be acquired by simply matched filtering and maximum ratio combining on the receiver side, and interference is avoided.

For a TD-SCDMA system adopting joint detection technology universally, a downlink receiver has to equalize all the multi-path components of all the code channels to try to suppress multiple-access interference (MAI) and inter-symbol interference (ISI) caused by the multi-path components. Therefore, if the above STBC is simply introduced, the inter-code channel interference and inter-symbol interference between two transmit signal groups have to be suppressed by an equalizer, thus the complexity of the joint detection by the receiver will be greatly increased, which is disadvantageous for practical application on the terminal side.

Summary of the Invention

The technical problem to be solved by the present invention is to provide a method for transmit diversity and processing by a receiver applicable to a TD-SCDMA system, so as to reduce the complexity of processing by the receiver as much as possible.

The features of the methods according to the present invention are defined in the independent claims, and the preferable features according to the present invention are defined in the dependent claims.

With the transmit diversity method of the present invention applied in a TD-SCDMA system, the large complexity of the receiver equalizer caused by the fact that the same transmit symbols have to be interleaved in time domain and changed into orthogonal transmit signals in the traditional space-time block code scheme is avoided. The present invention takes full advantage of different orthogonal code words serving as carriers of the same transmit symbols in space domain in the CDMA system, and as for the time delay that is indivisible in chip sampling precision (i.e., there is only the primary path), signals from the two transmitting antennas are completely orthogonal at the receiver, so transmit diversity gain is obtained without bringing about interferences; as for the secondary path with divisible time delay (i.e. signal components that are not completely orthogonal to one another), the current equalizing technique of joint detection in TD-SCDMA is already able to acquire multi-path diversity gain and meanwhile suppress interferences among the signals.

Brief Description of the Drawings

FIG. 1 is a schematic diagram illustrating a system with two transmitting antennas and one receiving antenna in accordance with an embodiment of the present invention;

FIG. 2 is a flow chart of a transmit diversity method in accordance with the present invention;

FIG. 3 is a schematic diagram illustrating the construction of a system matrix A of a receiver.

Preferred Embodiments of the Invention

According to the present invention, transmitting antennas are divided into two groups, different code channel mapping manners are applied for transmit signals of the two groups, and different training sequences are added to the data respectively after the same spread spectrum and scrambling operation, thereby a new transmit diversity is formed, and a corresponding signal processing technology is used in the receiver, thus complexity of the processing of the signals by the receiver is reduced.

Preferred embodiments of the present invention will be described in detail below in conjunction with the accompanying drawings.

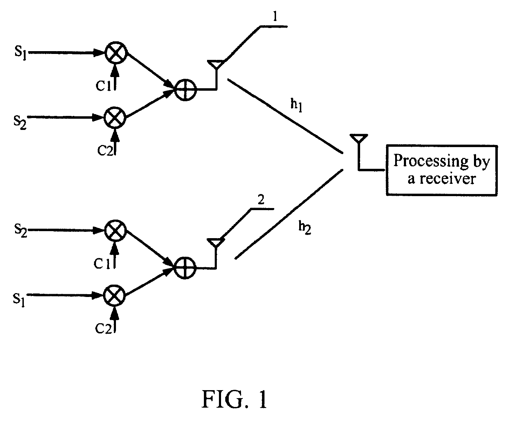

FIG. 1 is a schematic diagram illustrating a system with two transmitting antennas and one receiving antenna according to an embodiment of the present invention. Transmit diversity with two antennas is used in the embodiment, and either transmitting antenna can be regarded as beam-forming of a group of array antennas. FIG. 1 illustrates a simple transmit diversity with two antennas. Herein, it is assumed that the downlink code channels are allocated in pairs only, which can be guaranteed in downlink services of an actual TD-SCDMA system.

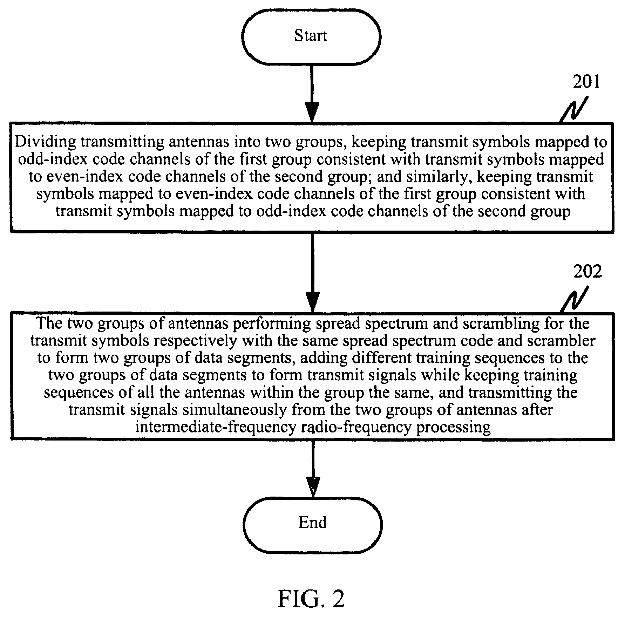

FIG. 2 is a flow chart of a transmit diversity method of the present invention. The method comprises the following steps of:

Step 201, dividing transmitting antennas into two groups, keeping transmit symbols mapped to odd-index code channels of the first group consistent with transmit symbols mapped to even-index code channels of the second group; similarly, keeping transmit symbols mapped to even-index code channels of the first group consistent with transmitting symbols mapped to odd-index code channels of the second group;

Step 202, the two groups of antennas performing spread spectrum and scrambling for the transmit symbols respectively with the same spread spectrum code and scrambler to form two groups of data fragments, adding different training sequences to the two groups of data segments respectively to form transmit signals while keeping training sequences of all the antennas within the group the same, and transmitting the transmit signals simultaneously from the two groups of transmitting antennas after intermediate-frequency radio-frequency processing; wherein all the antennas within the group may adopt beam-forming, while antennas in different groups adopt transmit diversity.

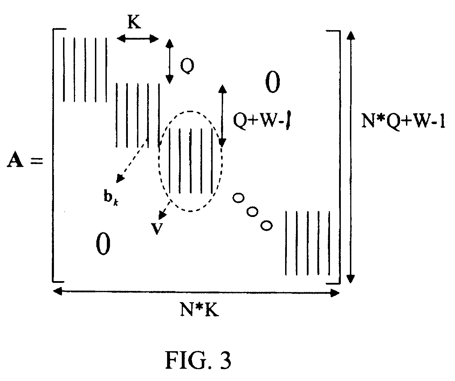

The main conception of the technical scheme of the present invention will be described in detail below in conjunction with FIG. 1 and FIG. 3:

With reference to FIG. 1, transmit symbols of antenna (or antenna group, similarly hereinafter) 1 and antenna 2 before spread spectrum (shown as transmit symbol $S_1$ and transmit symbol $S_2$ in FIG. 1) are exactly the same, except for the code channel mapping manners. Transmit symbols mapped to odd-index (2n-1) code channels of antenna 1 are kept consistent with transmit symbols mapped to even-index (2n) code channels of antenna 2; similarly, transmit symbols mapped to even-index (2n) code channels of antenna 1 are kept consistent with transmit symbols mapped to odd-index (2n-1) code channels of antenna 2; wherein, the value of n ranges from 1 to half of the maximum number of code channels. Exemplary code channels $C_2$ and $C_1$ are depicted in FIG. 1. For antenna 1, transmit symbol $S_1$ is mapped to code channel $C_1$, and transmit symbol $S_2$ is mapped to code channel $C_2$; while for antenna 2, the mapping relationship is just the converse, namely the transmit symbol $S_1$ is mapped to code channel $C_2$, and transmit symbol $S_2$ is mapped to code channel C1.

The two (or two groups of) antennas perform spread spectrum and scrambling respectively with the same spread spectrum code and scrambler to form two data segments, and add different training sequences respectively in the middle to form transmit signals, then transmit the transmit signals from the two transmitting antennas simultaneously after proper intermediate-frequency radio-frequency processing. The training sequences may be different cyclic shifts of the same basic Midamble code, or may be different basic Midamble codes. Herein, in the case of two groups of array antennas, the spread spectrum and scrambling operation and training sequences for different transmitting antennas within the group are exactly the same, and beam-forming of antennas within the group is supported.

The receiver performs channel estimation for the two transmitting antennas respectively to obtain two groups of channel impulse responses $\mathbf{h}_1$, $\mathbf{h}_2$; the channel estimation may be implemented with an existing method of a linear zero-forcing equalizer, and a nonlinear interference eliminating method may further be applied to increase precision of the channel estimation if different transmitting antennas use different basic Midamble codes.

The $\mathbf{h}_1$ and $\mathbf{h}_2$ are convolved respectively with each compound code word ($\mathbf{c}_1$, $\mathbf{c}_2$ ... $\mathbf{c}_K$) of a channelization code and a scrambler, so that two groups of compound eigenvectors $[\mathbf{b}_{1,1}, \mathbf{b}_{1,2} ... b_{1,K}]$ and $[\mathbf{b}_{2,1}, \mathbf{b}_{2,2} ... b_{2,K}]$ of signal channels and code channels are obtained, where K represents the maximum number of code channels.

The compound eigenvectors of odd indexes in group 1 and compound eigenvectors of even indexes in group 2 are added together, and compound eigenvectors of even indexes in group 1 and compound eigenvectors of odd indexes in group 2 are added together, so that a group of compound eigenvectors $[\mathbf{b}_1, \mathbf{b}_2 ... \mathbf{b}_K]$ synthesizing the two transmitting antennas is formed, and is further arranged into a small block $\mathbf{V} = [\mathbf{b}_1, \mathbf{b}_2 ... \mathbf{b}_K]$, where

$\mathbf{b}_k = \mathbf{b}_{1,k} + \mathbf{b}_{2,k+1}$, if $k$ is an odd number;
$\mathbf{b}_k = \mathbf{b}_{1,k} + \mathbf{b}_{2,k-1}$ if $k$ is an even number.

The above small block $\mathbf{V}$ is arranged in a Toepliz form according to the current TD-SCDMA method, so that a system matrix A is constructed. The specific constructing process is illustrated in FIG. 3, in which Q represents a downlink spread spectrum factor (16 in TD-SCDMA), W represents the larger one in lengths of the channel impulse responses $\mathbf{h}_1$ and $\mathbf{h}_2$, N is the number of symbols (22 in TD-SCDMA system) mapped to a code channel in downlink direction of a data terminal, and meanings of other parameters are the same as the above.

Soft symbols are obtained by equalizing received data according to zero forcing or minimum mean square error (MMSE), and after soft demodulation of the soft symbols, sending the demodulated soft bits for decoding and other bit-level processing, so as to restore the original transmit bits. The equalizer may use a linear method or nonlinear method. For example, in a linear MMSE equalizer, the equalizing process may be represented as

$$\hat{\mathbf{d}} = \left( \mathbf{A}^H \mathbf{R}_n^{-1} \mathbf{A} + \mathbf{R}_d^{-1} \right)^{-1} \cdot \mathbf{A}^H \mathbf{R}_n^{-1} \cdot \mathbf{e}$$

where $\mathbf{R}_n$ is a correlation matrix of noises (including interferences), $\mathbf{R}_d$ is a correlation matrix of signals, and $\mathbf{e}$ is received signals.

The present invention can be applied entirely in a scenario where a terminal receiver has multiple antennas. In this scenario, the receiver needs to generate a system matrix $\mathbf{A}_m$ corresponding to each receiving antenna according to the steps 3-6 as described above, and the general system matrix for the multi-antenna receiver is constructed as

$$\mathbf{A} = \begin{bmatrix} \mathbf{A}_1 \\ \mathbf{A}_2 \\ \mathbf{M} \\ \mathbf{A}_M \end{bmatrix},$$

where $M$ represents the maximum number of receiving antennas.

Of course, the present invention may have many other embodiments, and a person skilled in the art can make various corresponding alterations and modifications, but such corresponding alterations and modifications shall all fall into the protection scope of appended claims of the present invention.

**Claims**

1. A method for transmit diversity in a time division-synchronous code division multiple access "TD-SCDMA" system, the method comprises steps of:

   (1) dividing transmitting antennas into two groups, keeping transmit symbols mapped to odd-index CDMA code channels of a first group same as transmit symbols mapped to even-index CDMA code channels of a second group; similarly, keeping transmit symbols mapped to even-index CDMA code channels of the first group same as transmit symbols mapped to odd-index CDMA code channels of the second group; and

   **characterized by** that, the method further comprises:

   (2) the two groups of antennas performing spread spectrum and scrambling for the transmit symbols respectively with a same spread spectrum code and scrambler in each CDMA code channel to form two groups of data segments, adding different training sequences to the two groups of data segments respectively to form transmit signals while keeping training sequences of all antennas within each group of transmitting antennas the same, and transmitting the transmit signals simultaneously from the two groups of antennas after intermediate-frequency radio frequency processing.

2. The method of claim 1, wherein all the antennas in each group apply beam-forming.

3. The method of claim 1, wherein the different training sequences are different cyclic shifts of a same basic Midamble code, or different basic Midamble codes.

4. A method for processing by a receiver in a time division-synchronous code division multiple access "TD-SCDMA" system, comprising steps of:

   (1) the receiver performing channel estimation for two groups of transmitting antennas respectively to obtain two groups of channel impulse responses $\mathbf{h}_1$, $\mathbf{h}_2$;

   **characterized by** that, the method further comprises steps of:

   (2) convolving $\mathbf{h}_1$ and $\mathbf{h}_2$ respectively with each compound code word ($\mathbf{c}_1$, $\mathbf{c}_2$ ... $\mathbf{c}_K$) of a channelization code and a scrambler to obtain a first group of compound eigenvectors $[\mathbf{b}_{1,1}, \mathbf{b}_{1,2} ... \mathbf{b}_{1,k}]$ and a second group of compound eigenvectors $[\mathbf{b}_{2,1}, \mathbf{b}_{2,2} ... \mathbf{b}_{2,K}]$; where K represents a total number of code channels;

   **characterized in that**, the method further comprises:

   adding up compound eigenvectors of odd indexes in the first group of compound eigenvectors and compound eigenvectors of even indexes in the second group of compound eigenvectors, and adding up compound eigenvectors of even indexes in the first group of compound eigenvectors and compound eigenvectors of odd indexes in the second group of compound eigenvectors, so as to form a group of compound eigenvectors $[\mathbf{b}_1, \mathbf{b}_2 ... \mathbf{b}_K]$ synthesizing the two groups of transmitting antennas, and representing the group of compound eigenvectors [$\mathbf{b}_1$, $\mathbf{b}_2$ ... $\mathbf{b}_K$] as a small block $\mathbf{V}$ = [$\mathbf{b}_1$, $\mathbf{b}_2$ ... $\mathbf{b}_K$], where

$\mathbf{b}_k = \mathbf{b}_{1,k}$, + $\mathbf{b}_{2,k+1}$, if $k$ is an odd number;

$\mathbf{b}_k = \mathbf{b}_{1,k} + \mathbf{b}_{2,k-1}$, if $k$ is an even number;

(3) performing matrix arrangement for the small block V by arranging the small block V in a Topeliz form to construct a system matrix A; and

(4) equalizing received data to obtain soft symbols, and after soft demodulation of the soft symbols, sending demodulated soft bits for decoding and bit-level processing to restore original transmit bits.

5. The method of claim 4, wherein the step (1) further comprises: if different transmitting antennas using different basic Midamble codes, then further applying a nonlinear interference eliminating approach.

6. The method of claim 4, wherein in the step (4), the received data are equalized according to zero forcing or minimum mean square error "MMSE", and an equalizer uses a linear approach.

7. The method of any one in claims 4-6, wherein the receiver comprises a plurality of antennas, and accordingly, the receiver generates a system matrix $\mathbf{A}_m$ corresponding to each receiving antenna $m$ according to the steps (1) to (3), and a general system matrix for the multi-antenna receiver is constructed as

$$A = \begin{bmatrix} A_1 \\ A_2 \\ M \\ A_M \end{bmatrix},$$

where m represents the serial number of each receiving antennas, and M represents the total number of receiving antennas, and $m \in [1, M]$.

**Patentansprüche**

1. Verfahren zum Senden von Diversität in einem zeitgeteilten synchronen Code-Multiplex-Vielfachzugriffssystem "TD-SCDMA"-System, wobei das Verfahren folgende Schritte umfasst:

(1) Einteilen von Sendeantennen in zwei Gruppen, indem die Sendesymbole, die CDMA-Kodekanälen mit ungeraden Indexen zugeordnet sind, einer ersten Gruppe gleich gehalten werden wie Sendesymbole, die CDMA-Kodekanälen mit geraden Indexen zugeordnet sind, einer zweiten Gruppe; in ähnlicher Weise, indem die Sendesymbole, die CDMA-Kodekanälen mit geraden Indexen zugeordnet sind, der ersten Gruppe gleich gehalten werden wie Sendesymbole, die CDMA-Kodekanälen mit ungeraden Indexen zugeordnet sind, der zweiten Gruppe; und

**dadurch gekennzeichnet, dass** das Verfahren ferner Folgendes umfasst:

(2) die zwei Gruppen von Antennen führen Spreizspektrum und Verwürfelung für die Sendesymbole jeweils mit einem gleichen Spreizspektrumkode und Verwürfler in jedem CDMA-Kodekanal durch, um zwei Gruppen von Datensegmenten zu bilden, wobei unterschiedliche Trainingssequenzen den zwei Gruppen von Datensegmenten jeweils hinzugefügt werden, um Sendesignale zu bilden, während die Trainingssequenzen aller Antennen innerhalb jeder Gruppe von Sendeantennen gleich gehalten werden, und wobei die Sendesignale gleichzeitig von den zwei Gruppen von Antennen nach Zwischenfrequenz-Funkfrequenzverarbeitung gesandt werden.

2. Verfahren nach Anspruch 1, worin alle Antennen in jeder Gruppe Strahlformung verwenden.

3. Verfahren nach Anspruch 1, worin die unterschiedlichen Trainingssequenzen unterschiedliche zyklische Verschieben eines gleichen Grund-Midamble-Kodes, oder unterschiedlicher Grund-Midamble-Kodes sind.

4. Verfahren zur Verarbeitung durch einen Empfänger in einem zeitgeteilten synchronen Code-Multiplex-Vielfachzugriffssystem "TD-SCDMA"-System, umfassend die folgenden Schritte:

(1) der Empfänger führt eine Kanalschätzung für zwei Gruppen von Sendeantennen jeweils durch, um zwei Gruppen von Kanalimpulsantworten $h_1$, $h_2$ zu erhalten;

**dadurch gekennzeichnet, dass** das Verfahren ferner die folgenden Schritte umfasst:

(2) Falten von $h_1$ und $h_2$ jeweils mit jedem Verbund-Codewort ($c_1$, $c_2$ ... $c_K$) eines Kanalisierungscode und mit einem Verwürfler, um eine erste Gruppe von Verbund-Eigenvektoren [$b_{1,1}$, $b_{1,2}$ ... $b_{1,K}$] und eine zweite Gruppe von Verbund-Eigenvektoren [$b_{2,1}$, $b_{2,2}$ ... $b_{2,K}$] zu erhalten; wo K eine Gesamtzahl von Kodekanälen darstellt;

**dadurch gekennzeichnet, dass** das Verfahren ferner Folgendes umfasst:

Addieren von Verbund-Eigenvektoren ungerader Indexe in der ersten Gruppe von Verbund-Eigenvektoren und von Verbund-Eigenvektoren gerader Indexe in der zweiten Gruppe von Verbund-Eigenvektoren, und Addieren von Verbund-Eigenvektoren gerader Indexe in der ersten Gruppe von Verbund-Eigenvektoren und von Verbund-Eigenvektoren ungerader Indexe in der zweiten Gruppe von Verbund-Eigenvektoren, um eine Gruppe von Verbund-Eigenvektoren $[b_1, b_2 ... b_K]$ zu bilden, die die zwei Gruppen von Sendeantennen zusammenfügt, und Darstellen der Gruppe von Verbund-Eigenvektoren $[b_1, b_2 ... b_K]$ als einen kleinen Block $V = [b_1, b_2 ... b_K]$, wo

$b_k = b_{1,k} + b_{2,k+1}$, wenn $k$ eine ungerade Zahl ist;

$b_k = b_{1,k} + b_{2,k-1}$, wenn $k$ eine gerade Zahl ist;

(3) Durchführen von Matrix-Anordnung für den kleinen Block V durch Anordnen des kleinen Blocks V in einer Toepliz-Form, um eine Systemmatrix A zu konstruieren; und

(4) Abgleichen der empfangenen Daten, um weiche Symbole zu erhalten, und nach weicher Demodulation der weichen Symbole, Senden von demodulierten weichen Bits zur Dekodierung und Bitniveau-Verarbeitung, um ursprüngliche Sendebits wiederherzustellen.

**5.** Verfahren nach Anspruch 4, worin der Schritt (1) ferner Folgendes umfasst: wenn unterschiedliche Sendeantennen unterschiedliche Grund-Midamble-Kodes benutzen, dann ferner Verwenden eines nicht-linearen Entstörungsansatzes.

**6.** Verfahren nach Anspruch 4, worin im Schritt (4) die empfangenen Daten nach Zero-Forcing" oder nach dem kleinsten mittleren quadratischen Fehler "MMSE" abgeglichen werden und ein Entzerrer einen linearen Ansatz verwendet.

**7.** Verfahren nach einem der Ansprüche 4-6, worin der Empfänger eine Vielzahl von Antennen umfasst und dementsprechend eine Systemmatrix $A_m$ erzeugt, die jeder Empfangsantenne m nach den Schritten (1) bis (3) entspricht, und eine allgemeine Systemmatrix für den Mehrantennenempfänger als

$$A = \begin{bmatrix} A_1 \\ A_2 \\ M \\ A_M \end{bmatrix},$$

konstruiert ist, wo $m$ die Seriennummer jeder Empfangsantenne und $M$ die Gesamtzahl von Empfangsantennen darstellt und $m \in [1, M]$.

**Revendications**

**1.** Un procédé pour transmettre de la diversité dans un système à accès multiple par répartition en code synchrone et répartition dans le temps « TD-SCDMA », ce procédé comprenant les étapes consistant à :

(1) diviser des antennes de transmission en deux groupes, conserver des symboles de transmission mis en correspondance avec des canaux de code à indice impair CDMA d'un premier groupe identiques à des symboles de transmission mis en correspondance avec des canaux de code à indice pair CDMA d'un second groupe ; de façon similaire, conserver des symboles de transmission mis en correspondance avec des canaux de code à indice pair CDMA du premier groupe identiques à des symboles de transmission mis en correspondance avec des canaux de code à indice impair CDMA du second groupe ; et

**caractérisé en ce que** ce procédé comprend en outre :

(2) la réalisation par les deux groupes d'antennes d'un spectre étalé et d'un embrouillage pour les symboles de transmission respectivement, avec le même code de spectre étalé et embrouilleur dans chaque canal de code CDMA pour former deux groupes de segments de données, l'ajout de séquences d'entraînement différentes aux deux groupes de segments de données respectivement, pour former des signaux de transmission de forme tout en maintenant identiques les séquences d'entraînement de toutes les antennes à l'intérieur de chaque groupe d'antennes de transmission, et la transmission des signaux de transmission simultanément à partir des deux groupes d'antennes après un traitement de fréquence radio à fréquence intermédiaire.

**2.** Le procédé selon la revendication 1, dans lequel toutes les antennes dans chaque groupe appliquent une formation de faisceau.

3. Le procédé selon la revendication 1, dans lequel les différentes séquences d'entraînement sont des déplacements cycliques différents d'un même code Midamble basique ou de codes Midamble basiques différents.

4. Un procédé de traitement par un récepteur dans un système à accès multiple par répartition en code synchrone et répartition dans le temps « TD-SCDMA », ce procédé comprenant les étapes suivantes :

(1) le récepteur réalise une estimation de canal pour deux groupes d'antennes de transmission respectivement pour obtenir deux groupes de réponses d'impulsions de canal $h_1$, $h_2$ ;

**caractérisé en ce que** ce procédé comprend en outre les étapes consistant à :

(2) traiter $h_1$ et $h_2$ respectivement avec chaque mot de code composant ($c_1$, $c_2$, ... $c_k$) d'un code de canalisation et d'un embrouilleur pour obtenir un premier groupe de vecteurs propres composants [$b_{1,1}$, $b_{1,2}$ ... $b_{1,k}$] et un second groupe vecteurs propres composants [$b_{2,1}$, $b_{2,2}$... $b_{2,k}$] ; dans laquelle K représente un nombre total de canaux de code ;
**caractérisé en ce que** ce procédé comprend en outre :

l'ajout de vecteurs propres composants d'indices impairs dans le premier groupe de vecteurs propres composants et de vecteurs propres composants d'indices pairs dans le second groupe de vecteurs et l'ajout de vecteurs propres composants d'indices pairs dans le premier groupe de vecteurs propres composants et de vecteurs propres composants d'indices impairs dans le second groupe de vecteurs propres composants, de façon à former un groupe vecteurs propres composants [$b_1$, $b_2$ ... $b_k$] synthétisant les deux groupes d'antennes de transmission, et représentant le groupe de vecteurs propres composants [$b_1$, $b_2$ ... $b_k$] en tant que petit bloc $V$ = [$b_1$, $b_2$... $b_k$], dans lequel
$b_k$ = $b_{1,k}$ + $b_{2,k+1}$, si $k$ est un nombre impair ;
$b_k$ = $b_{1,k}$ + $b_{2,k-1}$, si $k$ est un nombre pair ;

(3) réaliser un agencement de matrice pour le petit bloc $V$ en agençant le petit block V en forme de Toeplitz pour construire une matrice de système A ; et
(4) égaliser les données reçues pour obtenir des symboles doux, et après une démodulation douce des symboles doux, envoyer les bits doux démodulés pour un décodage et un traitement au niveau du bit pour restaurer les bits de transmission originaux.

5. Le procédé selon la revendication 4, dans lequel l'étape (1) comprend en outre : si des antennes de transmission différentes utilisent des codes Midamble basiques différentes, alors on applique en outre une approche par élimination d'interférence non linéaire.

6. Le procédé selon la revendication 4, dans lequel dans l'étape (4), les données reçues sont égalisées suivant un forçage à zéro ou une erreur de carré moyen minimale « MMSE » et un égaliseur utilise une approche linéaire.

7. Le procédé selon l'une des revendications 4 à 6, dans lequel le récepteur comprend une pluralité d'antennes, et en conséquence, le récepteur génère une matrice de système $A_m$ correspondant à chaque antenne réceptrice m suivant les étapes (1) à (3), et une matrice de système générale pour le récepteur à multi-antenne est construite en tant que

$$A = \begin{bmatrix} A_1 \\ A_2 \\ M \\ A_M \end{bmatrix},$$

dans laquelle $m$ représente le numéro de série de chaque antenne réceptrice, et $M$ représente le nombre total d'antennes réceptrices et $m \in [1, M]$.

FIG. 1

```
                    ┌─────────────┐
                    │    Start    │
                    └──────┬──────┘
                           │                              201
                           ▼
┌──────────────────────────────────────────────────────────────┐
│ Dividing transmitting antennas into two groups, keeping       │
│ transmit symbols mapped to odd-index code channels of the     │
│ first group consistent with transmit symbols mapped to        │
│ even-index code channels of the second group; and similarly,  │
│ keeping transmit symbols mapped to even-index code channels   │
│ of the first group consistent with transmit symbols mapped    │
│ to odd-index code channels of the second group                │
└──────────────────────────────┬───────────────────────────────┘
                               │                            202
                               ▼
┌──────────────────────────────────────────────────────────────┐
│ The two groups of antennas performing spread spectrum and     │
│ scrambling for the transmit symbols respectively with the     │
│ same spread spectrum code and scrambler to form two groups    │
│ of data segments, adding different training sequences to the  │
│ two groups of data segments to form transmit signals while    │
│ keeping training sequences of all the antennas within the     │
│ group the same, and transmitting the transmit signals         │
│ simultaneously from the two groups of antennas after          │
│ intermediate-frequency radio-frequency processing             │
└──────────────────────────────┬───────────────────────────────┘
                               │
                               ▼
                    ┌─────────────┐
                    │     End     │
                    └─────────────┘
```

FIG. 2

FIG. 3

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 2006227908 A1, FABRICE PORTIER